# EUROPEAN PATENT APPLICATION

(11) **EP 2 131 274 A2**
(43) Date of publication of application: **09.12.2009**
(21) Application number: 09250847.2
(22) Date of filing: 25.03.2009
(51) Int. Cl.: G06F 3/048

(54) **Controlling an electronic device**

(30) Priority: 03.06.2008 US 156631
(71) Applicant: Sony Corporation, Tokyo 108-0075 (JP); Sony Electronics, Inc., Park Ridge, NJ 07656 (US)
(72) Inventor: Venkatesan, Prem, San Diego, CA 92127 (US); Almstrand, Cristian, San Diego, CA 92130 (US); Odenwalder, Peter, San Diego, CA 92127 (US)
(74) Representative: Scaddan, Gareth Casey

(57) **Abstract**

A system and method for effectively selecting functions in an electronic device includes a command database that is created for storing device commands that include specifically-defined - patterns and corresponding respective device functions. Appropriate pattern input means may be utilized for detecting the patterns that are input by device users. A command manager utilizes the recognized patterns to identify corresponding device functions from the command database. The electronic device may then execute the identified device functions.

## Description

### Field of the Invention

This invention relates generally to controlling an electronic device. Embodiments of this invention relate to techniques for controlling electronic devices, and more particularly to a system and method for effectively selecting functions in an electronic device.

### Background of the Invention

Implementing effective methods for controlling electronic devices is a significant consideration for designers and manufacturers of contemporary electronic devices. However, developing techniques for effectively controlling electronic devices may create substantial challenges for system designers. For example, enhanced demands for increased device functionality and performance may require more system processing power and require additional software resources. An increase in processing or software requirements may also result in a corresponding detrimental economic impact due to increased production costs and operational inefficiencies.

Furthermore, enhanced device capability to perform various advanced operations may provide additional benefits to a system user, but may also place increased demands on the control and management of various system components. For example, an enhanced electronic network device that effectively manages electronic content information may benefit from an effective implementation because of the large amount and complexity of the digital data involved.

Due to growing demands on system resources and substantially increasing data magnitudes, it is apparent that developing new techniques for controlling electronic devices is a matter of concern for related electronic technologies. Therefore, for all the foregoing reasons, developing effective techniques for controlling electronic devices remains a significant consideration for designers, manufacturers, and users of contemporary electronic devices.

### Summary of the Invention

Various respective aspects and features of the invention are defined in the appended claims. Combinations of features from the dependent claims may be combined with features of the independent claims as appropriate and not merely as explicitly set out in the claims.

In accordance with embodiments of the present invention, a system and method for effectively selecting functions in an electronic device are disclosed. In one embodiment, an electronic device may enter a command edit mode in response to any appropriate event including, but not limited to, a request from a device user. The device user may input a desired pattern into the electronic device using any effective techniques. For example, the pattern may be input by utilizing a touchscreen, a touch-sensitive pad, or a motion sensor of the electronic device. A command manager of the electronic device then stores the pattern into a command database in the electronic device.

The device user may then select a particular device function to correspond to the previously-input pattern by utilizing any effective methods. For example, the desired function may be selected from a function list displayed on a display of the electronic device. The command manager may link the selected function to the appropriate pattern by utilizing any effective techniques. In certain embodiments, the command manager stores the selected function with the corresponding pattern in the command database. Additional commands may be defined by utilizing similar procedures.

Subsequently, a device user may input a defined pattern into the electronic device using any effective techniques. For example, the pattern may be input by utilizing the touchscreen, touch-sensitive pad, or motion sensor of the electronic device. A pattern recognizer then performs a recognition procedure by utilizing any appropriate techniques to identify the input pattern. In response to the input pattern, the command manager may retrieve a linked command from the command database to identify a particular device function that corresponds to the input pattern. The electronic device may then advantageously execute the identified function. Additional defined commands may be selected and executing in a similar manner. For at least the foregoing reasons, embodiments of the present invention therefore provide an improved system and method for effectively selecting functions in an electronic device.

### Brief Description of the Drawings

Embodiments of the invention will now be described with reference to the accompanying drawings, throughout which like parts are referred to by like references, and in which:
FIG. 1 is a block diagram for one embodiment of an electronic device;
FIG. 2 is a frontal drawing for one embodiment of electronic device of FIG. 1;
FIG. 3 is a block diagram for one embodiment of the memory from FIG. 3;
FIG. 4 is a block diagram for one embodiment of the command database of FIG. 3;
FIG. 5 is a block diagram for one embodiment of the function database of FIG. 3;
FIGS. 6A-6B are a flowchart of method steps for performing a command editing procedure, in accordance with one embodiment of the present invention; and
FIGS. 7A-7B are a flowchart of method steps for performing a command execution procedure, in accordance with one embodiment of the present invention.

### Description of the Example Embodiments

Embodiments of the present invention seek to provide an improvement in electronic device control techniques. The following description is presented to enable one of ordinary skill in the art to make and use the invention, and is provided in the context of a patent application and its requirements. Various modifications to the disclosed embodiments will be readily apparent to those skilled in the art, and the generic principles herein may be applied to other embodiments. Therefore, the present invention is not intended to be limited to the embodiments shown, but is to be accorded the widest scope consistent with the principles and features described herein.

Embodiments of the present invention comprise a system and method for effectively selecting functions in an electronic device, and includes a command database that is created for storing device commands that include specifically-defined patterns and corresponding respective device functions. Appropriate pattern input means may be utilized for detecting the patterns that are typically input by device users. A command manager utilizes the recognized patterns to identify corresponding device functions from the command database. The electronic device may then advantageously execute the identified device functions.

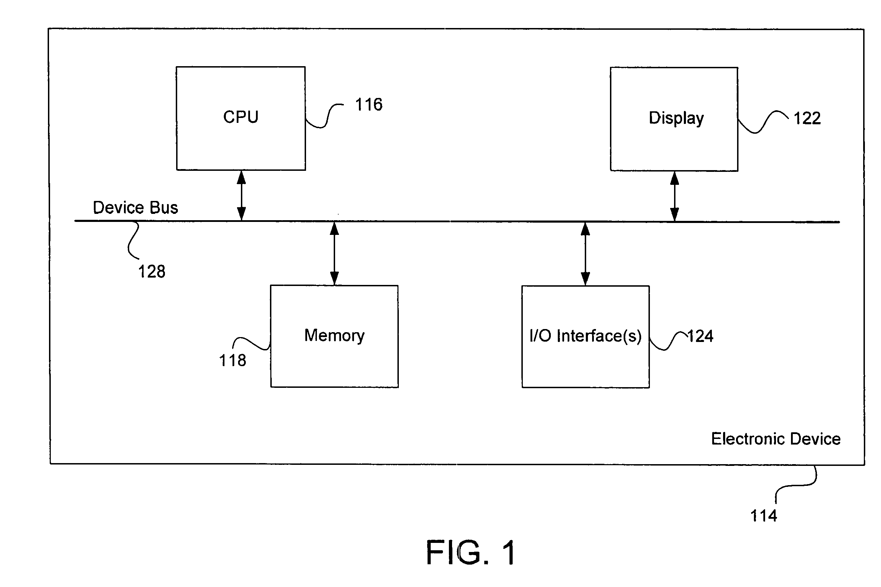

Referring now to FIG. 1, a block diagram for one embodiment of an electronic device 114 is shown. In the FIG. 1 embodiment, electronic device 114 may include, but is not limited to, a central processing unit (CPU) 116, a display 122, a memory 118, and one or more input/output interface(s) (I/O interface(s)) 124. The foregoing components of electronic device 114 may be coupled to, and communicate through, a device bus 128.

In alternate embodiments, electronic device 114 may be implemented using components and configurations in addition to, or instead of, certain of those components and configurations discussed in conjunction with the FIG. 1 embodiment. Furthermore, in the FIG. 1 embodiment, electronic device 114 may be implemented as any type of appropriate electronic device. For example, in certain embodiments, electronic device 114 may be implemented as any type of stationary or portable electronic device, such as a personal computer, a television, a consumer-electronics device, a cellular telephone, a settop box, an audio-visual entertainment device, or a personal digital assistant (PDA).

In the FIG. 1 embodiment, CPU 116 may be implemented to include any appropriate and compatible microprocessor device that preferably executes software instructions to thereby control and manage the operation of electronic device 114. The FIG. 1 display 122 may include any effective type of display technology including a cathode-ray-tube monitor or a liquid-crystal display device with an appropriate screen for displaying various information to a device user. Furthermore, in certain embodiments, display 122 may include a touchscreen sensor that allows a display 122 to detect pressure applied by a device user on the surface of a display screen of display 122.

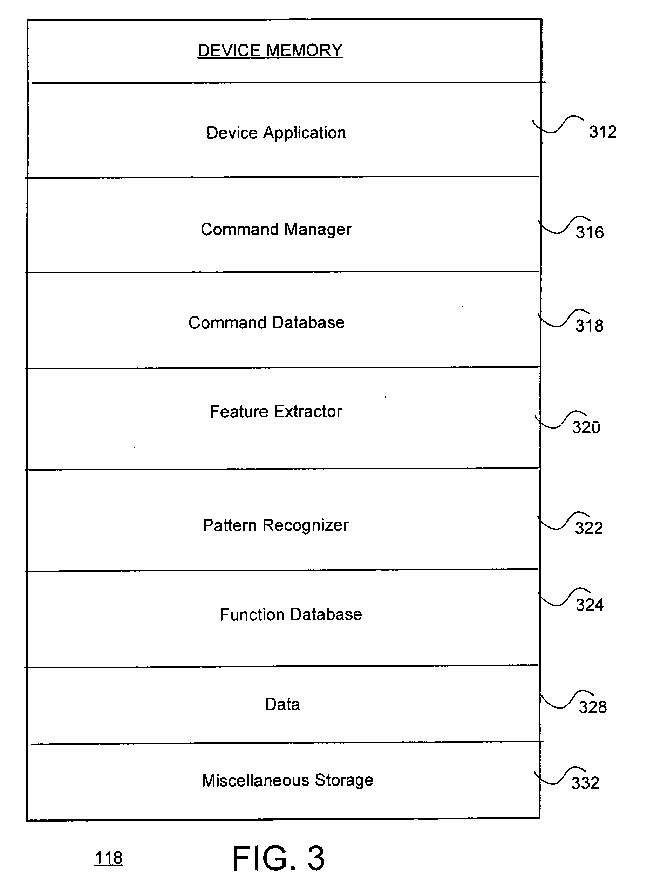

In the FIG. 1 embodiment, memory 118 may be implemented to include any combination of desired storage devices, including, but not limited to, read-only memory (ROM), random-access memory (RAM), and various types of non-volatile memory, such as floppy disks, memory sticks, compact disks, or hard disks. The contents and functionality of device memory 118 are further discussed below in conjunction with FIG. 3.

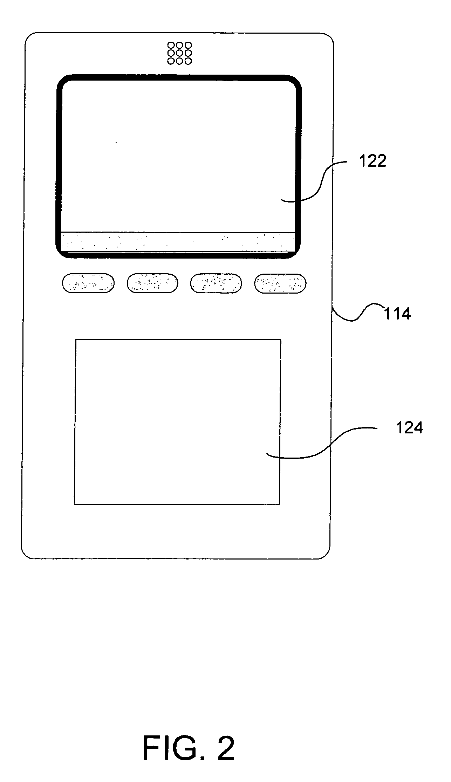

In the FIG. 1 embodiment, I/O interface(s) 124 may include one or more input and/or output interfaces to receive and/or transmit any required types of information by electronic device 114. I/O interface(s) 124 may include one or more means for allowing a device user to communicate with electronic device 114. For example, the foregoing means may include a keyboard device, a touch-sensitive input pad, a wireless remote-control device, a speech-recognition module with corresponding microphone, a graphical user interface with touch-screen capability, a motion sensor device, a hand-held device controller unit, or a selection button array mounted externally on electronic device 114. The implementation and control of electronic device 114 are further discussed below in conjunction with FIGS. 2-7.

Referring now to FIG. 2, a frontal drawing of one exemplary embodiment of the FIG. 1 electronic device 114 is shown. The FIG. 2 embodiment is presented for purposes of illustration, and in alternate embodiments, electronic device 114 may be implemented using components, features, and configurations in addition to, or instead of, certain of those components, features, and configurations discussed in conjunction with the FIG. 1 embodiment. Furthermore, in alternate embodiments, electronic device 114 may be implemented as any other type of portable or non-portable device.

In the FIG. 2 embodiment, electronic device 114 includes a display 122 for displaying appropriate information to a system user. In the FIG. 2 embodiment, electronic device 114 also includes one or more external I/O interfaces 124 to permit the system user to provide control information to electronic device 114. In many embodiments, because of the relatively small size of display 122, there is limited space for display icons and shortcuts on the screen of display 122. Furthermore, navigating through multiple levels of dropdown menus is both time-consuming and difficult, especially if a full keyboard and mouse are not available.

Therefore, embodiments of the present invention allow a device user to utilize a pattern mode for inputting a pre-defined pattern to easily activate a linked function in a user-friendly manner. The pattern may be any desired pattern that is input by utilizing any effective techniques. For example, a device user may input a pattern by tracing the desired pattern on a touchscreen of display 122 or adjacent to a proximity sensor device, or on a touch-sensitive pad from external I/O interfaces 124. Alternately, electronic device 114 may include a motion sensor module that senses 3-dimentional pattern information when a device user moves electronic device 114 in a pre-defined pattern. In certain embodiments, various types of patterns may also be input by physically manipulating external controls (keys, buttons, switches, etc.) from I/O interfaces 124.

In certain embodiments, electronic device 114 may then recognize the input pattern and execute an associated device function, such as launching a desired application, entering a particular mode, or performing a specified task. In certain embodiments, a feature extractor (see FIG. 3) of electronic device 114 may create pattern features from the input pattern, and a pattern recognizer (FIG. 3) may then utilize the pattern features to recognize the specific pattern. In various embodiments, any effective techniques may be utilized to recognize an input pattern. For example, electronic device 114 may utilize pattern matching, fuzzy logic, or artificial neural network techniques to identify the input pattern. A corresponding device function may then be located and executed based upon the foregoing identified pattern.

In certain embodiments, a desired device function may be automatically launched when a device user inputs a first initial character of the desired device function by utilizing pattern input means. For example, tracing a letter "N" may launch a navigation function, or a letter "C" may launch a calculator function. The electronic device 114 may also present a device user with all function options corresponding to a first initial character that are currently supported by the electronic device 114. For example, inputting the letter "N" may provide a list including a navigation application and a notepad application.

If the device user enters one or more subsequent characters of the desired device function, electronic device 114 may responsively present the device user with an updated list of only those function options corresponding to both the first initial character and the one or more subsequent characters. For example, if the device user inputs the letter "A" after the foregoing letter "N", then the function list may be updated to remove the notepad application. Additional details for the implementation of electronic device 114 are further discussed below in conjunction with FIGS. 3-7.

Referring now to FIG. 3, a block diagram for one embodiment of the FIG. 1 memory 118 is shown. In the FIG. 3 embodiment, memory 118 includes, but is not limited to, a device application 312, a command manager 316, a command database 318, a feature extractor 320, a pattern recognizer 322, a function database 324, data 328, and miscellaneous storage 332. In alternate embodiments, memory 118 may include various other components and functionalities in addition to, or instead of, certain of those components and functionalities discussed in conjunction with the FIG. 3 embodiment.

In the FIG. 3 embodiment, device application 312 may include program instructions that are preferably executed by a CPU 116 (FIG. 1) to perform various functions and operations for a electronic device 114. The particular nature and functionality of device application 312 typically varies depending upon factors such as the specific type and particular functionality of the corresponding electronic device 114.

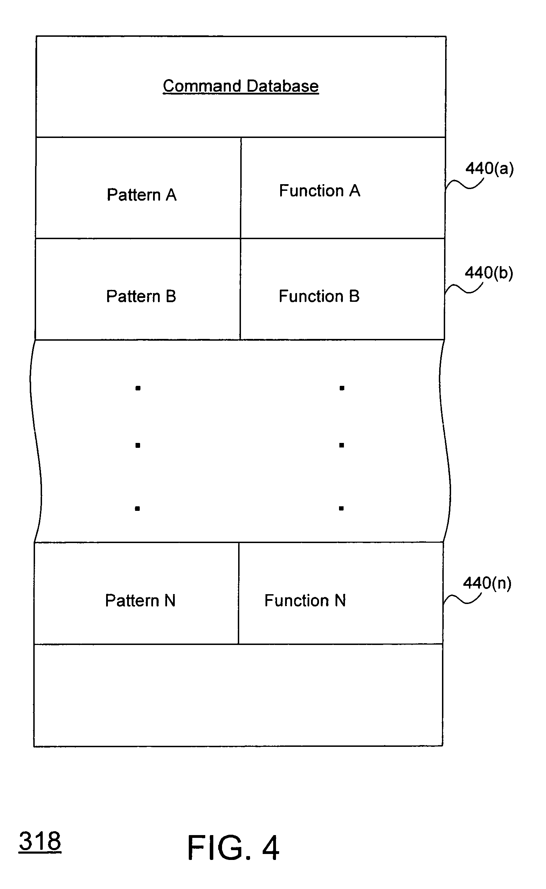

In the FIG. 3 embodiment, electronic device 114 utilizes command manager 316 to support and coordinate the pattern mode discussed above in conjunction with FIG. 2. In the FIG. 3 embodiment, command database 318 stores various patterns and corresponding linked device functions. Command database 318 is further discussed below in conjunction with FIG. 4. In certain embodiments, electronic device 114 may utilize feature extractor 320 and pattern recognizer 322 to identify input patterns, as discussed above in conjunction with FIG. 2.

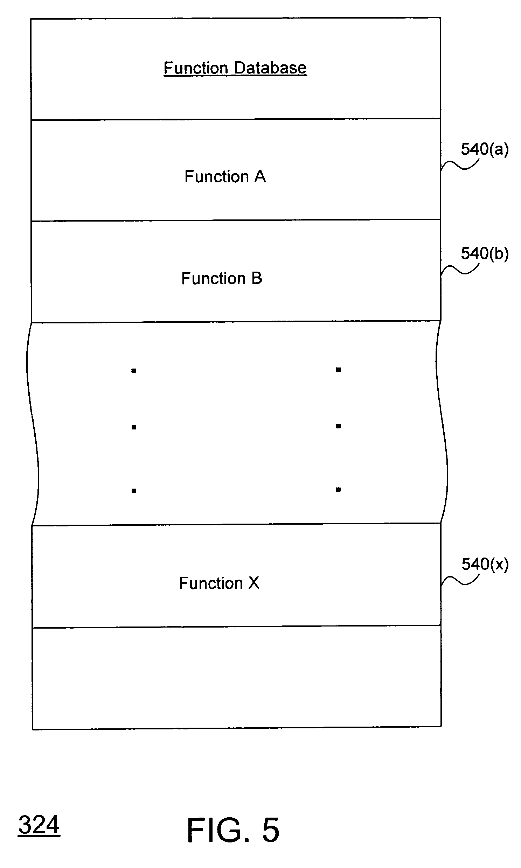

In the FIG. 3 embodiment, function database 324 may include a listing of all applications, functions, tasks, modes, and other relevant information that is associated with electronic device 114. The utilization of function database 324 is further discussed below in conjunction with FIG. 5. Data 328 may store any desired type of data for utilization by electronic device 114. Miscellaneous storage 332 may be utilized to store any other type of information, data, or software instructions for electronic device 114. The implementation and control of electronic device 114 are further discussed below in conjunction with FIGS. 4 through 7.

Referring now to FIG. 4, a block diagram for one embodiment of the FIG. 3 command database 318 is shown. The FIG. 4 embodiment is presented for purposes of illustration, and in alternate embodiments, command database 318 may include other components and information in addition to, or instead of, certain of those components and information discussed in conjunction with the FIG. 4 embodiment.

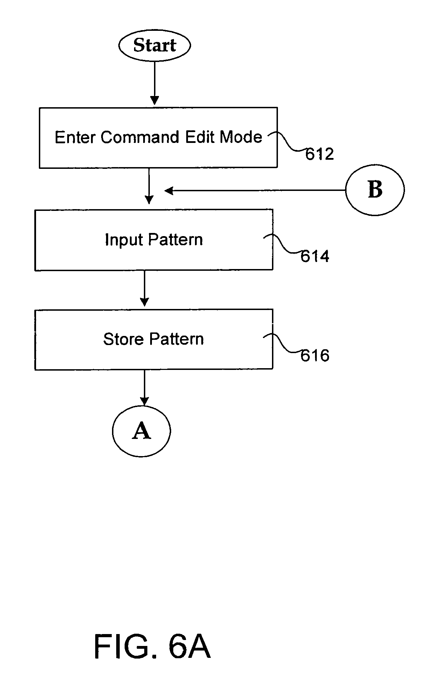

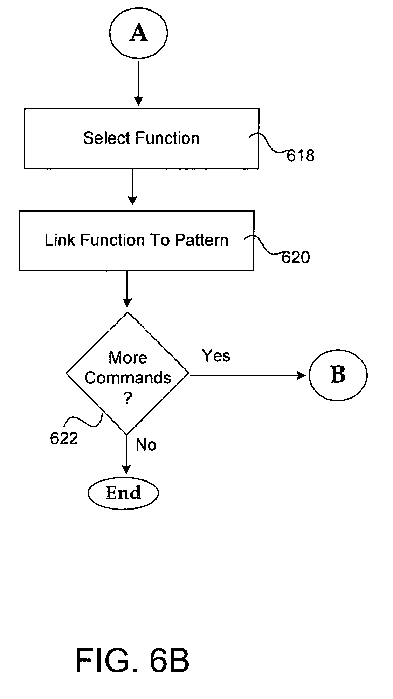

In the FIG. 4 embodiment, command database includes, but is not limited to, individual command selections corresponding respectively to command A 440(a) through command N 440(n). Each of the commands is comprised of a pattern and a corresponding device function. For example, in the FIG. 4 embodiment, a command A 440(a) has a pattern A that is linked to a function A. In the FIG. 4 embodiment, electronic device 114 may access command database 318 to either create new commands 440 or to identify an appropriate function for a particular input pattern. In certain embodiments, some or all of command database 318 may be predefined and populated during manufacture of electronic device 114. Utilization of command database 318 is further discussed below in conjunction with FIGS. 6-7.

Referring now to FIG. 5, a block diagram for one embodiment of the FIG. 3 function database 324 is shown. The FIG. 5 embodiment is presented for purposes of illustration, and in alternate embodiments, function database 324 may include other components and information in addition to, or instead of, certain of those components and information discussed in conjunction with the FIG. 5 embodiment.

In the FIG. 5 embodiment, function database 324 includes, but is not limited to, a listing of applications, functions, tasks, modes, and other relevant information that are associated with electronic device 114. In the FIG. 5 embodiment, function database 324 includes a function A 540(a) through a function X 540(x). In certain embodiments of the present invention, command manager 316 (FIG. 3) may utilize function database 324 to support a text command function during which a device user inputs a word or phrase by utilizing any effective techniques such as a keyboard, a touchscreen, speech recognition, a mouse pad, or a menu selection. This text command function is especially advantageous in situations where no pattern has been previously entered into command database 318 (FIG. 4).

In the FIG. 5 embodiment, command manager 316 or other appropriate entity may then recognize the input text and search through function database 324 to locate one or more identical or related matches. In certain embodiments, these function matches may be defined by predetermined text mapping rules that are selected according to any effective and appropriate criteria. Electronic device 114 may then take a specified responsive action that may include, but is not limited to, displaying information related to the identified function(s), or executing the particular function.

Referring now to FIGS. 6A-6B, a flowchart of method steps for performing a command editing procedure is shown, in accordance with one embodiment of the present invention. The flowchart of FIGS. 6A-6B is presented for purposes of illustration, and in alternate embodiments, the present invention may utilize steps and sequences other than those steps and sequences discussed in conjunction with FIGS. 6A-6B.

In the FIG. 6 embodiment, in step 612, an electronic device 114 may enter a command edit mode in response to any appropriate event including, but not limited to, a request from a device user. In step 614, the device user may input a desired pattern into the electronic device 114 using any effective techniques. For example, the pattern may be input by utilizing a touchscreen, a touch-sensitive pad, or a motion sensor of the electronic device 114. In step 616, a command manager 316 of the electronic device 114 then stores the pattern into a command database 318 in the electronic device 114.

In step 618, the device user may then select a particular device function 540 to correspond to the previously-input pattern by utilizing any effective methods. For example, the desired function 540 may be selected from a function list displayed on a display 122 of the electronic device 114. In step 620, command manager 316 may link the selected function to the appropriate pattern by utilizing any effective techniques. In certain embodiments, the command manager 316 stores the selected function 540 with the corresponding pattern in the command database 318. In step 622, the command manager 316 determines whether any more commands remain to be created. If additional commands remain, then the FIG. 6 process returns to step 614 to define any additional commands. However, if no additional commands remain to be defined, then the FIG. 6 process may terminate.

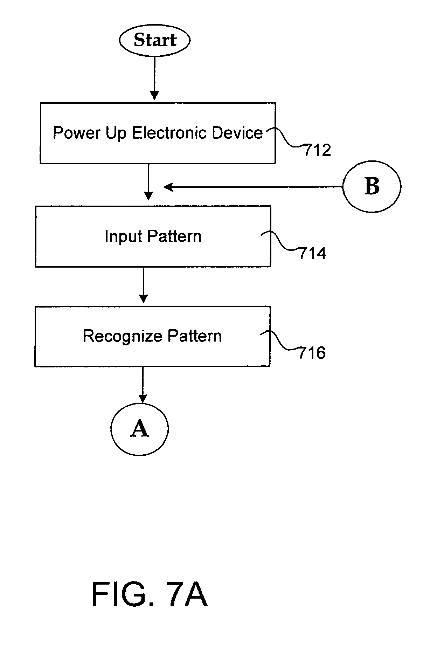

Referring now to FIGS. 7A-7B, a flowchart of method steps for performing a command execution procedure is shown, in accordance with one embodiment of the present invention. The flowchart of FIGS. 7A-7B is presented for purposes of illustration, and in alternate embodiments, the present invention may utilize steps and sequences other than those steps and sequences discussed in conjunction with FIGS. 7A-7B.

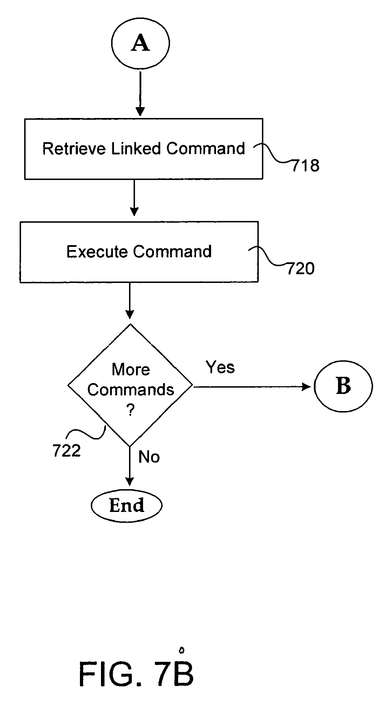

In the FIG. 7 embodiment, in step 712, operating power is supplied to an electronic device 114. In step 714, a device user may input a desired pattern into the electronic device 114 using any effective techniques. For example, the pattern may be input by utilizing a touchscreen, a touch-sensitive pad, or a motion sensor of the electronic device 114. In step 716, a pattern recognizer 322 performs a recognition procedure by utilizing any appropriate techniques to identify the previously-input pattern.

In certain embodiments, if an input pattern is unrecognized, then the command manager 318 may dynamically prompt the device user to store the unrecognized pattern and link the pattern to a corresponding function, as discussed above in conjunction with FIG. 6. Furthermore, during functions that were not initiated by entering a previously-defined pattern, command manager 316 may automatically prompt a device user to add an appropriate command to command database 318.

In step 718, in response to the input pattern, a command manager 316 may retrieve a linked command from a command database 318 to identify a particular device function 540 that corresponds to the previously-input pattern. In step 720, electronic device 114 may then advantageously execute the identified function. In step 722, the command manager 316 determines whether any more commands remain to be executed. If additional commands remain, then the FIG. 7 process returns to step 714 to select and execute any additional commands. However, if no additional commands remain to be defined, then the FIG. 7 process may terminate. For at least the foregoing reasons, embodiments of the present invention therefore provide an improved system and method for effectively selecting functions in an electronic device.

The invention has been explained above with reference to certain embodiments. Other embodiments will be apparent to those skilled in the art in light of this disclosure. For example, the present invention may readily be implemented using certain configurations and techniques other than those described in the specific embodiments above. Additionally, the present invention may effectively be used in conjunction with systems other than those described above. Therefore, these and other variations upon the discussed embodiments are intended to be covered by the present invention, which is limited only by the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A system for performing a function selection procedure to control an electronic device, comprising:
a command database for storing device commands that include patterns and device functions that correspond to said patterns;
pattern input means coupled to said electronic device for detecting said patterns that are input by a device user; and
a command manager that utilizes said patterns to identify said device functions in said command database, said electronic device then executing said device functions.

2. The system of claim 1 wherein said electronic device is implemented as a portable electronic device that responds to said device commands from said function selection procedure.

3. The system of claim 2 wherein said portable electronic device includes a display screen of a limited size, said function selection procedure conserving display space on said display screen.

4. The system of claim 2 wherein said function selection procedure allows said device user to directly access said device functions without navigating through function menus on a display screen of said electronic device.

5. The system of claim 1 wherein said device user inputs said patterns by drawing said patterns on a touchscreen display of said electronic device.

6. The system of claim 1 wherein said device user inputs said patterns by tracing said patterns on a touch-sensitive pad of said electronic device.

7. The system of claim 1 wherein said device user inputs said patterns by moving said electronic device to cause a motion pattern that is detected by a motion sensor of said electronic device.

8. The system of claim 1 wherein said device commands are predefined and stored in said command database during a device manufacturing process.

9. The system of claim 1 wherein said device commands are dynamically defined and stored in said command database by said device user.

10. The system of claim 1 wherein a feature extractor creates pattern features corresponding to said patterns, a pattern recognizer then analyzing said pattern features to identify said patterns.

11. The system of claim 1 wherein said command manager prompts said device user to create a new device command when an undefined pattern is received by said pattern input means.

12. The system of claim 1 wherein said command manager prompts said device user to create a new device command corresponding to a current device function that is not represented in said command database.

13. The system of claim 1 wherein said command manager identifies said patterns by utilizing at least one of pattern matching, fuzzy logic, and artificial neural network techniques.

14. The system of claim 1 wherein said command manager utilizes a function database to support a text command function during which a device user enters input text, said command manager utilizing said input text to search through said function database to locate one or more function matches.

15. The system of claim 14 wherein said function matches are defined by predetermined text mapping rules, said electronic device then take a specified responsive action that includes either displaying said one or more function matches or executing said one or more function matches.

16. The system of claim 1 wherein said device user begins a command creating procedure by requesting said electronic device to enter a command edit mode, said device user inputting an input pattern, said command manager storing said input pattern in said command database.

17. The system of claim 16 wherein said device user then choose a desired device function to correspond to said input pattern, said command manager linking said desired device function to said input pattern by storing said desired device function in said command database.

18. The system of claim 1 wherein said device user begins a command execution procedure by inputting a selected pattern, a pattern recognizer then identifying said selected pattern.

19. The system of claim 18 wherein said command manager retrieves a linked device function that corresponds to said selected pattern in said command database, said electronic device then executing said linked device function.

20. The system of claim 1 therein a desired device function is automatically launched when a device user inputs a first initial character of said desired device function by utilizing said pattern input means.

21. The system of claim 20 wherein said command manager presents said device user with all function options corresponding to said first initial character that are currently supported by said electronic device.

22. The system of claim 21 wherein said device user enters one or more subsequent characters of said desired device function, said command manager responsively presenting said device user with an updated list of only those function options corresponding to both said first initial character and said one or more subsequent characters.

23. A method for controlling an electronic device, comprising:
creating a command database for storing device commands that include patterns and device functions that corresponds to said patterns;
detecting said patterns with pattern input means, said patterns being input by a device user through said pattern input means; and
utilizing a command manager to identify said device functions in said command database by utilizing said patterns, said electronic device then executing said device functions.
